# EUROPEAN PATENT APPLICATION

(11) **EP 4 507 392 A1**
(43) Date of publication of application: **12.02.2025**
(21) Application number: 23190859.1
(22) Date of filing: 10.08.2023
(51) Int. Cl.: H04W 52/02

(54) **MAIN RADIO TO LOW POWER RADIO OFFLOADING**

(71) Applicant: Panasonic Intellectual Property Corporation of America, Torrance, CA 90504 (US)
(72) Inventor: LI, Hongchao, 63225 Langen (DE); SUZUKI, Hidetoshi, Osaka 571-8501 (JP); KUANG, Quan, 63225 Langen (DE)
(74) Representative: Grünecker Patent- und Rechtsanwälte PartG mbB

(57) **Abstract**

The disclosure relates to a user equipment, a network node device, and respective methods for a user equipment and a base station. More specifically, the user equipment comprises a receiver and a circuitry. The receiver, in operation, receives a reference signal. The circuitry, in operation, performs a first measurement based on the reference signal; determines whether a result of the first measurement fulfills a preconfigured condition; and when the preconfigured condition is fulfilled, performs a low power operation.

## Description

### BACKGROUND

### 1. Technical Field

The present disclosure relates to transmission and reception of signals in a communication system. In particular, the present disclosure relates to methods and apparatuses for such transmission and reception.

### 2. Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE and NR, further improvements and options may facilitate efficient operation of the communication system as well as particular devices pertaining to the system.

### SUMMARY

One non-limiting and exemplary embodiment facilitates efficient low power operation of communication devices.

In an embodiment, the techniques disclosed here feature an apparatus (e.g. a user equipment, UE). The apparatus comprises a receiver and circuitry. The receiver in operation: receives a reference signal. The circuitry in operation: performs a first measurement based on the reference signal; determines whether a result of the first measurement fulfills a preconfigured condition; and when the preconfigured condition is fulfilled, performs a low power operation.

It should be noted that general or specific embodiments may be implemented as a system, a method, an integrated circuit, a computer program, a storage medium, or any selective combination thereof. For instance, an integrated circuit can control a process of a UE or network node.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system;
- **Fig. 2**: is a schematic drawing that shows a functional split between NG-RAN and 5GC;
- **Fig. 3**: is a sequence diagram for RRC connection setup/reconfiguration procedures;
- **Fig. 4**: is a schematic drawing showing usage scenarios of Enhanced mobile broadband (eMBB), Massive Machine Type Communications (mMTC) and Ultra Reliable and Low Latency Communications (URLLC);
- **Fig. 5**: is a block diagram showing an exemplary 5G system architecture for a non-roaming scenario;
- **Fig. 6**: is a block diagram illustrating an exemplary functional structure of a base station and a user equipment;
- **Fig. 7**: is a block diagram illustrating an exemplary functional structure of the circuitry handling of a determination of low power operation that may be included in the exemplary user equipment of Fig. 10;
- **Fig. 8**: is a block diagram illustrating an exemplary functional structure of the low power configuration circuitry that may be included in the exemplary base station equipment of Fig. 10;
- **Fig. 9**: is a flow chart illustrating exemplary steps performed by a user equipment;
- **Fig. 10**: is a flow chart illustrating exemplary steps performed by a base station;
- **Fig. 11**: exemplarily illustrates a switching between a low power state and a main radio state;
- **Fig. 12**: exemplarily illustrates a switching between a low power state, an intermediate state and a main radio state;
- **Fig. 13**: exemplarily illustrates a switching between a main radio state and a low power state including sub-states;
- **Fig. 14**: exemplarily illustrates a measurement configuration information element (IE);
- **Fig. 15**: exemplarily illustrates a measurement object included in the measurement configuration IE of Fig. 14;
- **Fig. 16**: exemplarily illustrates measurement objects included in the measurement configuration IE of Fig. 14;
- **Fig. 17**: exemplarily illustrates a report configuration included in the measurement configuration IE of Fig. 14.

### DETAILED DESCRIPTION

### 5G NR system architecture and protocol stacks

3GPP has been working at the next release for the 5th generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

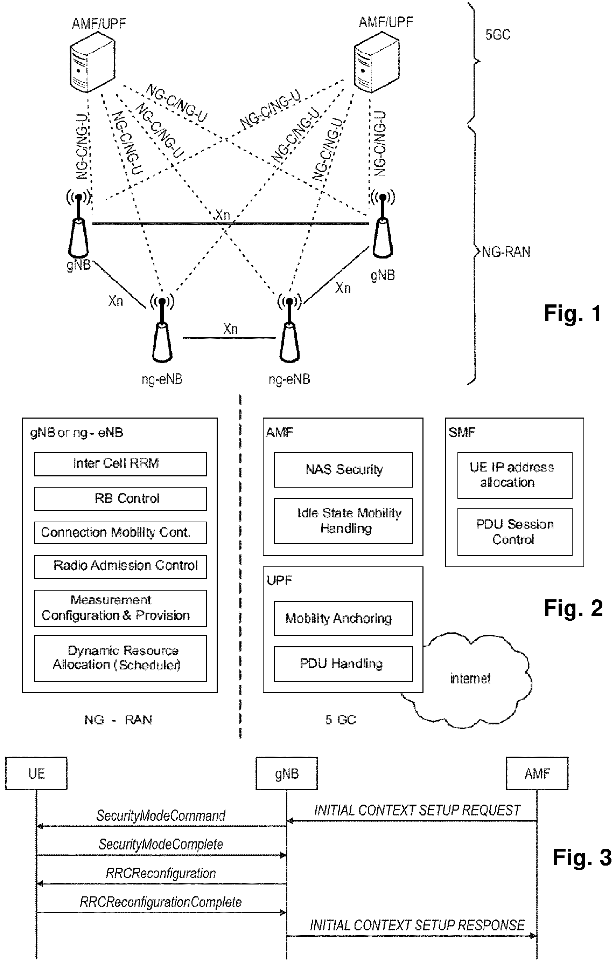

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SOAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v15.6.0). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

Comparing to LTE numerology (subcarrier spacing and symbol length), NR supports multiple different types of subcarrier spacing, labeled by a parameter *µ* (in LTE there is only a 15 kHz subcarrier spacing, corresponding to *µ* = 0 in NR). The types NR numerology is summarized in 3GPP TS 38.211, v 15.7.0.

### 5G NR functional split between NG-RAN and 5GC

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from theAMF or CAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UUDL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

**Fig. 3** illustrates some interactions between a UE, gNB, and AMF (a 5GC entity) in the context of a transition of the UE from RRC_IDLE to RRC_CONNECTED for the NAS part (see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation *configuration.*

### Usage Scenarios of IMT for 2020 and beyond

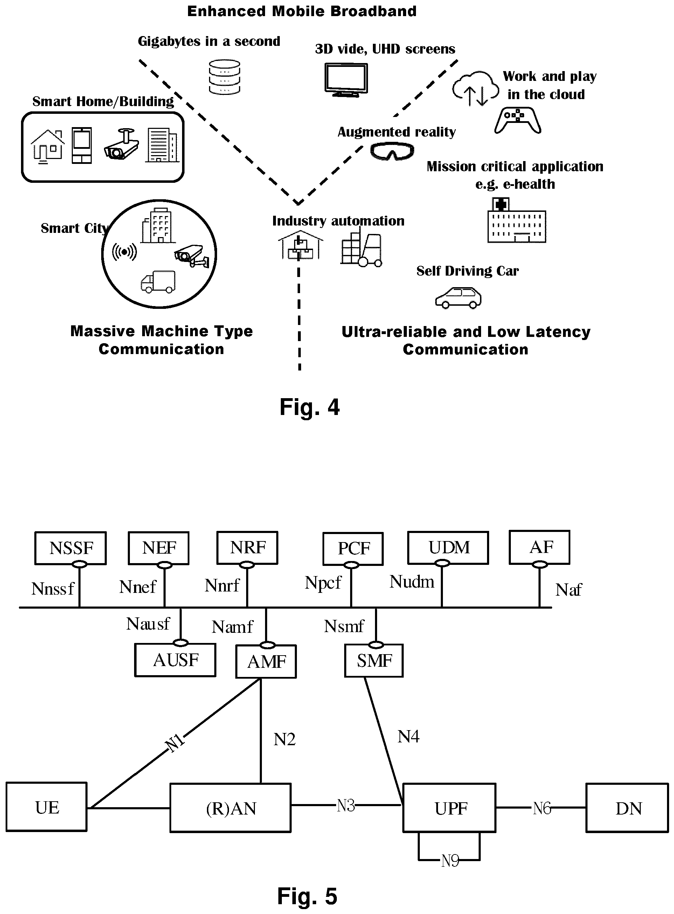

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. ITU-R M.2083 Fig.2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁻⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring.

Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g., as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig. 5** illustrates a 5G NR non-roaming reference architecture (see e.g., 3GPP TS 23.501 e.g., v16.9.0, section 4.2.3, see also v17.5.0 or v18.0.0). An Application Function (AF), e.g., an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g., QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

Fig. 5 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g., operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMBB and mMTC services to at least one of functions (for example NEF, AMF, SMF, PCF,UPF, etc.) of the 5GC to establish a PDU session including a radio bearer between a gNodeB and a UE in accordance with the QoS requirement and circuitry, which, in operation, performs the services using the established PDU session.

### Control Signals

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### Reference Signals

In the present disclosure, the reference signals are signals known to both a base station and a mobile station and each reference signal may be referred to as a Reference Signal (RS) or sometimes a pilot signal. The reference signal may be any of a Demodulation RS (DMRS), a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### Time Intervals

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

### Frequency Bands

The present disclosure may be applied to any of a licensed band and an unlicensed band. Each band may include one or more component carriers. Each component carrier constitutes a time-frequency resource grid including resource elements, each resource element defined by a subcarrier in frequency domain and a symbol in time domain.

### Communication

The present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### Downlink control channel monitoring, PDCCH, DCI

Many of the functions operated by the UE involve the monitoring of a downlink control channel (e.g. the PDCCH, see 3GPP TS 38.300 v15.6.0, section 5.2.3) to receive e.g. particular control information or data destined to the UE.

A non-exhaustive list of these functions is given in the following:
- a paging message monitoring function,
- a system information acquisition function,
- signaling monitoring operation for a Discontinued Reception, DRX, function,
- inactivity monitoring operation for a Discontinued Reception, DRX, function,
- random access response reception for a random access function,
- reordering function of a Packet Data Convergence Protocol, PDCP, layer.

As mentioned above, the PDCCH monitoring is done by the UE so as to identify and receive information intended for the UE, such as the control information as well as the user traffic (e.g. the DCI on the PDCCH, and the user data on the PDSCH indicated by the PDCCH).

Control information in the downlink (can be termed downlink control information, DCI) has the same purpose in 5G NR as the DCI in LTE, namely being a special set of control information that e.g. schedules a downlink data channel (e.g. the PDSCH) or an uplink data channel (e.g. PUSCH). In 5G NR there are a number of different DCI Formats defined already (see TS 38.212 v15.6.0 section 7.3.1).

Said DCI formats represent predetermined formats in which respective information is formed and transmitted. In particular, DCI formats 0_1 and 1_1 are used for scheduling PUSCH and PDSCH, respectively, in one cell.

The PDCCH monitoring of each of these functions serves a particular purpose and is thus started to said end. The PDCCH monitoring is typically controlled at least based on a timer, operated by the UE. The timer has the purpose of controlling the PDCCH monitoring, e.g. limiting the maximum amount of time that the UE is to monitor the PDCCH. For instance, the UE may not need to indefinitely monitor the PDCCH, but may stop the monitoring after some time so as to be able to save power.

As mentioned above, one of the purposes of DCI on the PDCCH is the dynamic scheduling of resources in downlink or uplink or even sidelink. In particular, some formats of DCI are provided to carry indication of resources (resource allocation, RA) allocated to a data channel for a particular user. The resource allocation may include specification of resources in frequency domain and/or time domain.

### Terminology

In the following, UEs, base stations, and procedures will be described for the new radio access technology envisioned for the 5G mobile communication systems, but which may also be used in LTE mobile communication systems or future mobile communication systems. Different implementations and variants will be explained as well. The following disclosure was facilitated by the discussions and findings as described above and may for example be based at least on part thereof.

In general, it should be noted that many assumptions have been made herein so as to be able to explain the principles underlying the present disclosure in a clear, concise and understandable manner. These assumptions are however to be understood as merely examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure. In particular:

### User Equipment

A *terminal* or *user terminal* or *user device* or *mobile station* or *mobile node* is referred to in the LTE and NR as a *user equipment (UE).* This may be a mobile device or communication apparatus/device such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as loT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

### Network node

In the present disclosure, the *base station* may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well. A base station may be a *scheduling node* or *network node,* e.g. forming a part of the network for providing services to terminals. In particular, a base station may provide wireless access to terminals. Communication between the communication device (e.g. UE or terminal) and the scheduling device (e.g. base station) is typically standardized and may be defined by different layers, such as PHY, MAC, RRC etc. (see also the above discussion). In LTE and NR, the wireless interface protocol stack includes physical layer, medium access layer (MAC) and higher layers. In control plane, higher-layer protocol Radio Resource Control protocol is provided. Via RRC, the base station can control configuration of the terminals and terminals may communicate with the base station to perform control tasks such as connection and bearer establishment, modification, or the like, measurements, and other functions. The terminology used in LTE is eNB (or eNodeB), while the currently used terminology for 5G NR is gNB. The term *"base station"* or *"radio base station"* here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. In particular, the base station may also be gNB in a Non-Terrestrial Network (NTN) NR system.

### Power saving

A new study item has been started within 3GPP, aiming at studying and evaluating low-power wake-up receiver (LP-WUR) architectures and wake-up signal (LP-WUS) designs to support wake-up receivers. One of the targets is to achieve a substantial UE power saving gain. A report capturing this study item is available at http://www.3gpp.org and titled "Low-power Wake-up Signal and Receiver for NR as a Rel.18 SI topic" with contribution number RP-221271 from 3GPP TSG RAN meeting #96 in Hungary, June 6- 9, 2022.

Accordingly, power consumption depends on the configured length of wake-up periods, e.g., paging cycle. To meet the battery life requirements above, eDRX (extended Discontinuous Reception) cycle with large value is expected to be used, resulting in high latency, which may not be suitable for such services with requirements of both long battery life and low latency. Especially for latency-critical use cases, eDRX is not suitable.

Currently, UEs need to periodically wake up once per DRX cycle, which dominates the power consumption in periods with no signaling or data traffic. DRX is used in RRC idle mode when monitoring for paging messages. Accordingly, a UE does not have to monitor all PDCCH transmission opportunities, but rather only the paging occasions, and can thus better preserve battery power. In connected mode, DRX allows a UE to enter into a "sleep" sate during which it does not need to monitor PDCCH. The UE periodically wakes up to monitor PDCCH or to send a scheduling request for initiating an uplink data transfer. Thus, a base station (gNB) is required to wait until the UE becomes active and only then transmit data to it. Uplink is not delayed, unless the base station configures uplink scheduling request period according to the downlink DRX cycle.

DRX cycle in connected mode is configured by RRC. An inactivity timer is started after each PDCCH reception. After expiry of the inactivity timer, there may be an optional period of short DRX cycles, before the regular (long) DRX cycles. The active period in which the UE reads PDCCH is referred to as "OnDuration" or "DRX active" state. The sleeping period in which the UE does not read PDCCH is referred to as "OffDuration" or "DRX inactive" state. A base station has the possibility to send a UE into the DRX inactive mode anytime by using MAC signaling.

Since Release16, a wake-up signal (WUS) has been provided by a DCI format 2_6. The DCI format 2_6 has been used to wake up a UE or to indicate to a UE to skip PDCCH monitoring before DRX. In particular, this DCI is used for notifying the power saving information outside DRX Active time for one or more UEs. The DCI is scrambled by PS-RNTI and carries:
- Wake-up indication whether the UE is to enter a dormancy state or wake up from the dormancy state; and
- an SCell dormancy indication which is a bitmap where each bit corresponds to one of the SCell group(s) configured by higher layers (RRC), with MSB to LSB of the bitmap corresponding to the first to last configured S
- Cell group. This indicates for which SCells the wake-up indication applies.

In more detail, Section 7.3.1.3.7 of 3GPP TS 38.212 v17.2.0 defines the Format 2_6. Accordingly, DCI format 2_6 is used for notifying the power saving information outside DRX Active Time for one or more UEs. The following information is transmitted by means of the DCI format 2_6 with CRC scrambled by PS-RNTI: *block number 1, block number 2,..., block number N.* The starting position of a block is determined by the parameter PSPositionDCI2-6 provided by higher layers for the UE configured with the block. If the UE is configured with higher layer parameter PS-RNTI and dci-Format2-6, one block is configured for the UE by higher layers, with the following fields defined for the block: Wake-up indication (1 bit), SCell dormancy indication - 0 bit if higher layer parameter Scell-groups-for-dormancy-outside-active-time is not configured; otherwise 1, 2, 3, 4 or 5 bits bitmap determined according to higher layer parameter Scell-groups-for-dormancy-outside-active-time, where each bit corresponds to one of the SCell group(s) configured by higher layers parameter Scell-groups-for-dormancy-outside-active-time, with MSB to LSB of the bitmap corresponding to the first to last configured SCell group. The size of DCI format 2_6 is indicated by the higher layer parameter SizeDCI_2-6.

UE may save power by skipping unnecessary PDCCH monitoring period using format 2_6 DCI. The dormancy can be configured and applied for RRC CONNECTED UEs.

In Release17, a Paging Early Indication (PEI) design has been introduced. It employs DCI format 2_7. DCI format 2_7 is used to indicate UE whether it needs to skip or monitor its paging occasions in each paging cycle. Accordingly, a UE may save power by reducing synchronization signal block (SSB) measurements before detecting PEI, compared with the conventional paging detection, which potentially requires measuring more SSBs. The PEI can be configured in SIB and applied for paging monitoring of both RRC CONNECTED and IDLE/INACTIVE UEs.

If UEs are able to wake up only when they are triggered, e.g., paging, power consumption could be dramatically reduced. This can be achieved by using a wake-up signal to trigger the main radio and a separate receiver which has the ability to monitor wake-up signal with a very low power consumption. Main radio may work for data transmission and reception, which can be turned off or set to deep sleep unless it is turned on. The power consumption for monitoring wake-up signal depends on the wake-up signal design and the hardware module of the wake-up receiver used for signal detecting and processing.

In order to target low-power WUS/WUR for power-sensitive, small form-factor devices including loT use cases (such as industrial sensors, controllers) and wearables, signal design and transmitter / receiver operations have to be considered carefully. Other use cases are not precluded, such as XR/smart glasses, smart phones, and the like.

In other words, Release 18 LP-WUS/WUR design aims for LP-WUS, which is friendly for more efficient receiver structure, e.g. separate module for LP-WUS detection with relaxed requirement on time/frequency synchronization. The legacy design has been basically DCI-based, which requires UE to firstly measure one or more SSBs for AGC training and time/frequency synchronization before detection. Long active time for receiving and processing SSBs is the main source of power consumption.

### UE measurements and measurement reporting

UE measurements are used for cell selection, cell reselection, power control calculation, mobility procedures and beam management. Measurements are performed for a measurement object. In the current L1 beam measurement framework, a measurement object, which refers to a set of RSs, e.g. SSBs and/or CSI-RS, is semi-statically configured by RRC.

A result of such a measurement may include, for example, a Reference Signal Received Power, RSRP, value or a Reference Signal Received Quality, RSRQ, value or a Signal-to-Noise and Interference Ratio, SINR, value. However, the present disclosure is not limited to said examples. Any other suitable result of a measurement may be used.

An UE performs a measurement and reports the measurement results to the serving gNB of the UE. To said end, the UE can be configured by its serving gNB with the necessary parameters and information. For example, the configuration of the UE for performing measurements and reporting the measurement results involves conceptually:
- The quantity or a set of quantities to be reported.
- The downlink resources for each cell on which measurements should be performed in order to derive the quantity or quantities to be reported.
- How the actual reporting is to be carried out, e.g. reporting timing and uplink channel to use for the reporting.
According to one example, the measurement and reporting can be e.g. based on the CSI reporting framework, which generally can be considered to involve two parts, one for configuration and another one for the triggering of the CSI reporting.

The *CSI-MeasConfig* IE is the highest-level IE for CSI configuration and configures not just L1-RSRP-related measurement/reporting for beam management, but also conventional CSI-related measurement/reporting (such as CQI) to determine proper MIMO precoding, modulation and coding, etc.

Mainly three types of lists are configured by the *CSI-MeasConfig* IE:
1) List of RS resource sets
   - Each RS resource set in the list contains one or multiple RS resources. E.g. multiple CSI-RS resources can be configured e.g. by a *NZP-CSI-RS-Resource* IE and then grouped into a RS resource set by a *NZP-CSI-RS-ResourceSet* IE. Other possible RS resource are defined by the lEs *CSI-IM-Resource,* and SSB-*Index.*
2) List of *CSI-ResourceConfig* lEs
   - Different *CSI-ResourceConfig* in the list can contain one or more different RS resource sets, chosen from List element 1). This may include *NZP-CSI-RS-ResourceSet, CSI-IM-ResourceSet,* and/or *CSI-SSB-ResourceSet,* respectively identified by suitable IDs (see e.g. *NZP-CSI-RS-ResourceSetId, CSI-IM-ResourceSetId,* and/or *CSI-SSB-ResourceSetId)*
3) List of CSI-ReportConfig IEs.
   - Different *CSI-ReportConfig* in the list configures different CSI report instance. This is the Information Element which links the reporting configuration of this *CSI-ReportConfig* (such as by PUCCH or PUSCH) to the measurement resource sets (i.e. one *CSI-ResourceConfig* in the above List element 2). *CSI-ResourceConfigID,* being included in the *CSI-ReportConfig* IE, identifies a *CSI-ResourceConfig* IE to be used.
Measurements and reporting can be carried out on a periodic, semi-periodic or aperiodic basis. The measurements results are reported by the UE to the gNB, e.g. as uplink control information on the PUCCH or the PUSCH. In one 5G compliant example, the CSI reporting is performed by the UE based on the definitions given in 3GPP TS 38.212 v17.4.0, in section 6.3.

In present 3GPP 5G systems, there are two types of reference signals that can be used for the measurements, the SSB (see above mentioned SSB-*Index*) and the CSI-RS (Channel State Information-Reference Signals; see above *NZP-CSI-RS-Resource* IE and *CSI-IM-Resource* IE). The SSB is always transmitted by the network and is not specific to a UE and is thus unflexible. For instance, the SSB can be used in connection with a comparatively wide beam. On the other hand, the CSI-RS can be specifically configured for a UE, and is quite flexible regarding when and how often it is transmitted (time domain) and regarding the frequency-domain resources. The CSI-RS can be used in connection with a comparatively narrow beam, because it can be configured for only one or a few UEs.

There are several reporting components of CSI in 5G NR (i.e. several different types of CSI), e.g. based on 3GPP TS 38.214 - section 5.2.1 thereof:
- CQI (Channel Quality Information)
- PMI (Precoding Matrix Indicator)
- CRI (CSI-RS Resource Indicator)
- SSBRI (SS/PBCH Resource Block Indicator)
- LI (Layer Indicator)
- RI (Rank Indicator)
- L1-RSRP, and/or
- Capability Index

One or more or a combination of different metrics can be reported by the UE. Generally, the metrics can be grouped into two types:
- L1-RSRP-related quantities (e.g. cri-RSRP and ssb-Index-RSRP, see later IE *CSI-Report Config)*
- CSI-related quantities (e.g. the rest from the IE *CSI-Report Config*)

The L1-RSRP-related quantities are new ones introduced for the first time in NR (Rel-15), and one of their purposes is to facilitate beam management. By contrast, the CSI-related quantities (such as CQI) are traditional ones, existing in LTE already. Those traditional CSI-related quantities can be used by the base station to choose e.g. the proper MIMO precoding, modulation and coding size, etc. to match the channel condition.

An exemplary implementation follows current definitions of the 5G 3GPP standards, such as defined in 3GPP TS 38.331, and may involve e.g. the following Information Elements (IE):
*CellGroupConfig, CSI-MeasConfig, CSI-ReportConfig, CSI-ResourceConfig, NZP-CSI-RS-Resource,* and *NZP-CSI-RS-ResourceSet.*

In particular, the Information Element (IE) *CSI-MeasConfig* and the Information Element CSI-*ReportConfig* indicate parameters of the CSI reporting framework usable by the UE to measure and then report the measurement results.

One possible following sequence of lEs for defining measurement and report according to the CSI framework includes:
- *CellGroupConfig* IE
   ∘ the *ServingCellConfig* IE of *SpCellConfig* or of *SCellConfig*
   • *CSI-MeasConfig* IE
   - *CSI-ResourceConfig* IE
      ∘ *NZP-CSI-RS-ResourceSet*
         ▪ *NZP-CSI-RS-Resource*
      ∘ *CSI-SSB-ResourceSet*
         ▪ *SSB-Index*
      ∘ *CSI-IM-ResourceSet*
         ▪ *CSI-IM-Resource*
   - *CSI-ReportConfig* IE

Details for said framework are provided, for example, in 3GPP TS 38.331, section 6.3.2.

### Embodiments

As mentioned above, long active time for receiving and processing reference signals, such as SSBs and CSI-RSs, is the main source of power consumption. Such a processing of reference signals includes, for example, measurements and maybe a corresponding reporting. Thus, it may be desirable to reduce power consumption for such processing.

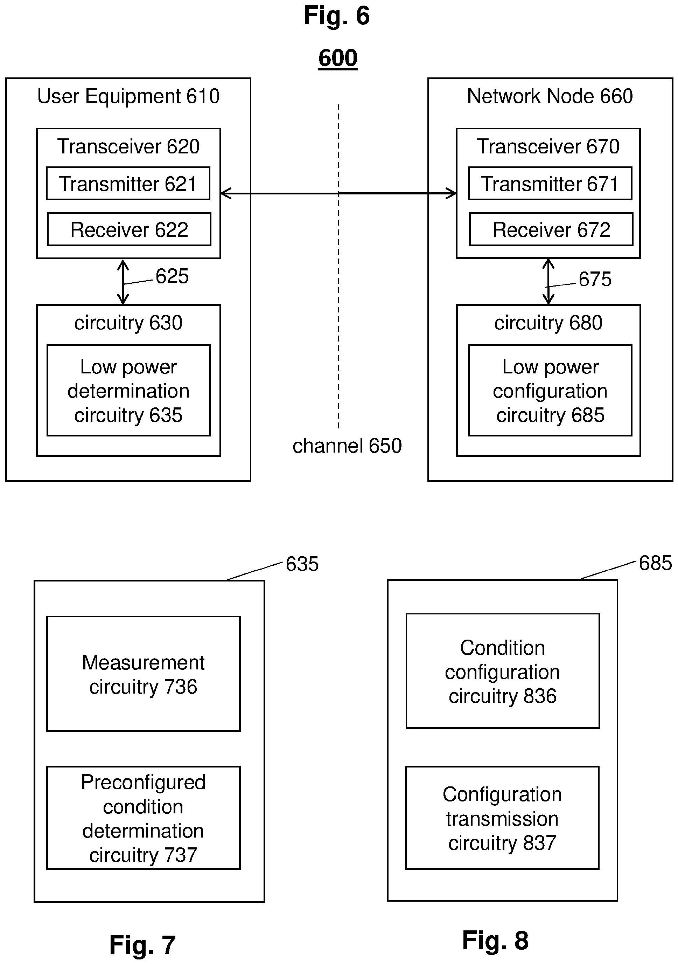

The present disclosure provides a network node and a user equipment well as a corresponding methods and programs. For instance, an integrated circuit can control a process of a UE or base station. As illustrated in **Fig. 6****,** user equipment 610 and network node 660 may communicate with each other over a wireless channel in a wireless communication system. For instance, the user equipment may be a NR user equipment, and the network node may be a base station or scheduling node such as a eNB, or a NR gNB, in particular a gNB in a Non-Terrestrial Network (NTN) NR system. An example of such communication system is illustrated in Fig. 6. The communication system 600 may be a wireless communication system in accordance with the technical specifications of 5G, in particular a NR communication system. However, the present disclosure is not limited to 3GPP NR and may also be applied to other wireless or cellular systems such as NTNs.

Fig. 6 illustrates a general, simplified and exemplary block diagram of a user equipment 610 (also termed communication device) and a network node 660. However, in general, a scheduling device may also be a terminal in case of a sidelink connection between two terminals. Moreover, in particular with respect to the use cases of URLLC; eMBB, and mMTC, the user equipment 610 may also be a sensor device, a wearable device, or a connected vehicle, or a controller of an automated machine in an industrial factory. Further, a user equipment 610 may be able to function as a relay between network node 660 and another communication device (e.g. the disclosure is not limited to communication "terminals" or user "terminals").

The UE and eNB/gNB are communicating with each other over a (wireless) physical channel 650 respectively using their transceivers 620 (UE side) and 670 (network node side). Together, the network node 660 and the terminal 610 form the communication system 600. The communication system 600 may further include other entities such as those shown in Fig. 1.

As shown in **Fig. 6** (left-hand side), according to a first exemplary embodiment, a user equipment (UE) 610 is provided. The UE 610 comprises a receiver 621 and circuitry 630. Said receiver 621 may be included in a transceiver 620. The exemplary transceiver 620 in Fig. 6 further includes a transmitter 621.

The receiver 622, in operation, receives a reference signal. The circuitry 630, in operation, performs a first measurement based on the reference signal. Moreover, the circuitry 630 determines whether a result of the first measurement fulfills a preconfigured condition. When the preconfigured condition is fulfilled, a low power operation is performed.

Any of the exemplary measurements throughout the present disclosure, including said first measurement, may be a measurement regarding a radio resource management (RRM), i.e. a so-called RRM measurement. Further details regarding measurements are explained above in section *UE measurements and measurement reporting.*

Such a preconfigured condition may be preconfigured by a standard, a received configuration, or the like. A received configuration may be transmitted, for example, by a base station. For example, the received configuration may be an RRC configuration or another configuration.

In general, the circuitry 630 may control the transceiver 620, which may include the transmitter 621 and the receiver 622, to receive and/or transmit data. This is illustrated by an arrow 625 which represents schematically an interface between the circuitry 630 and the transceiver 620, over which the control is performed. For example, the circuitry 630 may control 625 the transceiver 620 to receive at least one reference signal.

Moreover, the UE may report to a base station based on a measurement result. The UE, in particular the circuitry, may further obtain a report based on a result of a measurement based on one or more of the MR reference signal or the LR reference signal. As indicated above, the UE 610 may further comprise a transmitter 621, which may transmit the report to a base station 660. Said transmitter 621 may be included in a transceiver 620. For example, such reporting may be performed when the UE is in an RRC connected mode.

Further details regarding reporting of measurement results are explained above in section UE *measurements and measurement reporting.*

**Fig. 7** shows an exemplary functional structure of the circuitry 630, in particular, the circuitry 635 handling a low power determination, i.e. a determination whether the UE 610 may perform low power operation. As shown, the low power determination 635 may include a measurement circuitry 736. For example, the low power determination circuitry 635 may include an additional preconfigured condition determination circuitry 737. More specifically, circuitry 736 may perform a first measurement based on a received reference signal. The preconfigured condition determination circuitry 737 may determine whether a result of the first measurement fulfills a preconfigured condition.

For example, by providing a low power operation based on a preconfigured condition a UE power saving while maintaining acceptable measurement performance is facilitated.

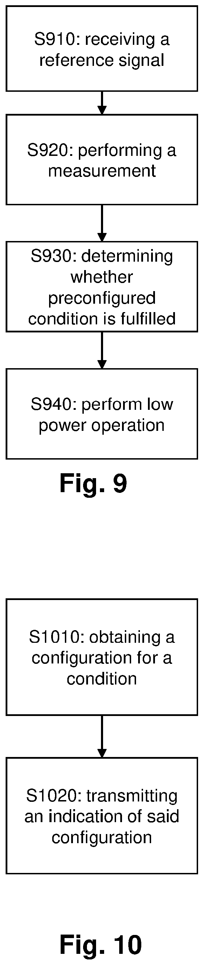

In correspondence with the above-described UE, a method for performing low power operation by a user equipment is provided. As shown in **Fig. 9****,** the method comprises the steps of:
- receiving S910 a reference signal;
- performing S920 a first measurement based on the reference signal;
- determining S930 whether a result of the first measurement fulfills a preconfigured condition; and
- when the preconfigured condition is fulfilled, performing S940 a low power operation.

As also shown in Fig. 6 (right-hand side), a network node 660 is provided. The network node 660 comprises a transceiver 670 and a circuitry 680. The circuitry 680, in operation, obtains a configuration for a condition for a measurement based on a predetermined reference signal, wherein when the measurement, which is performed by a UE fulfills said condition, the UE performs a low power operation. The transmitter 671 transmits an indication of said configuration to the UE.

In general, the circuitry 680 may control the transceiver 670 to receive and/or transmit data. This is illustrated by an arrow 675, which represents schematically an interface between the circuitry 680 and the transceiver 670, over which the control is performed. For example, the circuitry 680 may instruct 675 the transceiver 670 to transmit an indication of said configuration to the UE.

**Fig. 8** shows an exemplary functional structure of the circuitry 680, in particular, the low power configuration circuitry 685. In particular, the low power configuration circuitry 685 may include a condition configuration circuitry 836. For example, the low power configuration circuitry 685 may include an additional configuration transmission circuitry 837. Circuitry 836 may be responsible for obtaining a configuration for a condition for a measurement based on a predetermined reference signal. Furthermore, circuitry 837 may be responsible for transmitting an indication of a configuration for the condition to the UE.

For example, by providing configuration for a condition for a measurement based on a predetermined reference signal, a low power operation of an UE is facilitated.

Furthermore, in correspondence with the above-described base station, a communication method to be performed by a network node is provided. As shown in Fig. 10, the method comprising the step of:
- obtaining S1010 a configuration for a condition for a measurement based on a predetermined reference signal, wherein when the measurement, which is performed by a UE fulfills said condition, the UE performs a low power operation,
- transmitting S1020 an indication of said configuration to the UE.

The UE 610 may comprise the transceiver 620 and a (processing) circuitry 630, and the network node 660 may comprise the transceiver 670 and a (processing) circuitry 680. The transceiver 610 in turn may comprise and/or function as a receiver and/or a transmitter. In this disclosure, in other words, the term "transceiver" is used for hardware and software components that allow the communication device 610, or, respectively base station 660 to transmit and/or receive radio signals over a wireless channel 650. Accordingly, a transceiver corresponds to a receiver, a transmitter, or a combination of a receiver and a transmitter. Typically, a base station and a communication device are assumed to be capable of transmitting as well as receiving radio signals. However, particularly with respect to some applications of eMBB, mMTC and URLLC (smart home, smart city, industry automation etc.), cases are conceivable in which a device, such as a sensor, only transmits signals. Moreover, the term "circuitry" includes processing circuitry formed by one or more processors or processing units, etc. The circuitries 630 and 680 (or processing circuitries) may be one or more pieces of hardware such as one or more processors or any LSIs. Between the transceiver and the processing circuitry there is an input/output point (or node) over which the processing circuitry, when in operation, can control the transceiver, i.e. control the receiver and/or the transmitter and exchange reception/transmission data.

The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data that is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

It is further noted that any of the steps/operations/methods described below may be performed or controlled by the circuitry 630 (on the UE side) and/or the circuitry 680 (on the network node side).

In the further description, the details and embodiments apply to each of the user equipment, the network node and the methods unless explicit statement or context indicates otherwise.

Moreover, it is noted that any of the steps described below may be included as code instructions in a program, which may be executed by one or more processors (e.g. the circuitry 630 and/or the circuitry 680).

When performing such a low power operation, the UE, in particular, the circuitry may perform a second measurement based on a low power radio, LR, reference signal. For example, the UE receives a second reference signal, which is a reference signal for low power operation. The second measurement may be performed based on said received LR reference signal.

Such a low power radio reference signal may include, for example, at least one or more of a Low Power Wake Up Signal (LP-WUS), a Low Power Synchronization Signal (LP-SS). Moreover, alternatively or in addition, a low power radio reference signal may include any reference signal that is suitable for performing measurements, such as any reference signals, which are defined by a standard. For example, a SSB or a CSI-RS may be used as a reference signal suitable for a measurement. However, the present disclosure is not limited to said examples. In general any signal that is suitable for performing measurements may be used as a low power radio reference signal.

An exemplary Low Power Radio (LR) operation may include measurements based on LP-WUS and/or LP-SS, or any legacy reference signal, such as, for example, one or more of a Primary Synchronization Signal (PSS), a Secondary Synchronization Signal (SSS), a physical broadcast channel demodulation reference signal (PBCH DMRS), in any of an RRC inactive mode or an RRC idle mode. Moreover, the LR operation may include measurements based on LP-WUS and/or LP-SS, or any legacy reference signal, such as PSS/SSS/PBCH DMRS in an RRC connected mode. A time and/or frequency tracing may be performed in the LR operation using one or more of a SSB, a CSI-RS, a LP-WUS or a LP-SS. In such an exemplary LR operation a control channel and/or a control signal, such as, for example, an LP-WUS indicating PDCCH monitoring or a paging signal, may be monitored.

In general, the terms "low power" (LP) and "low power radio" (LR) are used as synonyms with throughout the description.

Such a LR operation may be performed as an alternative and/or in addition to a Main Radio operation (MR). For example, a MR operation and a LR operation may use different respective hardware in an UE. For example, a MR operation and a LR operation may use a same hardware in an UE. For example, an UE may comprise a LR transceiver, a LR circuitry, a MR transceiver, and a MR circuitry. For example, said LR transceiver and said LR circuitry may perform the low power operation, whereas the MR transceiver and the MR circuitry may perform the main operation. For example, the LR circuitry and the MR circuitry may be included in a same physical circuity.

In any of said exemplary cases, a MR operation and a LR operation may provide different functionalities of an UE in a respective operational mode. For example, an UE while being in an LR operation mode may perform one or more of the functionalities that are also available in a MR operation mode. The terms "operation", "operational mode", "mode", "state" and "operational state" are used as synonyms with respect to the low power radio and/or the main radio throughout the description.

An exemplary Main Radio (MR) operation may include measurements based on SSBs and/or CSI-RS in any of an RRC inactive mode or an RRC idle mode. Moreover, the MR operation may include measurements based on SSBs and/or CSI-RS in an RRC connected mode. A time and/or frequency tracing may be performed in the MR operation using one or more of a SSB, a CSI-RS, a LP-WUS (Low Power Wake Up Signal) or a LP-SS (Low Power Synchronization Signal). In such an exemplary MR operation a control channel, such as, for example, PDCCH, may be monitored.

In other words, a MR reference signal may include at least one or more of a SSBs and a CSI-RS.

The present invention is not limited by such exemplary MR and LR operations. MR and LR operation, especially time/frequency tracking and control channels monitoring, may or may not be explicitly reflected in a standard specification depending on whether MR or LR hardware to operate one or more of the above function(s), but may only nominate which channel, signal and/or reference signal to receive/monitor/measure. Which channel to be measure, e.g., by RRM measurement, may imply MR or LR operation of one or more other channels.

For example, in LR operation, an UE may use specific low power reference signals. In other words, when the UE performs the low power operation, the receiving of the reference signal includes a receiving of the low power radio (LR) reference signal.

Such a low-power reference signal may include a more simplified waveform (relatively to a non-low-power reference signal). For example, an on-off keying (OOK) modulation and/or a frequency-shift keying (FSK) modulation allow for a lower complexity receiver (relatively to a MR receiver) to receive and monitor said low-power reference signal. Such a low-power reference signal may be, for example, a LP-WUS, which may indicate that UE is to perform a MR operation. Such a low power reference signal may be, for example, LP-SS provides reference signal for time/frequency domain tracking/synchronization and/or RRM measurement.

When the UE does not perform the low power operation, the receiving of the reference signal includes a receiving of a main radio (MR), reference signal. For example, when not performing a low power operation, the UE may perform a MR operation, a combination of MR and LR operation, or the like.

For example, such a MR reference signal may be a SSB and/or a CSI-RS. The present disclosure is not limited to these exemplary reference signals. In general, any other suitable reference signal may be used for performing a measurement.

A switching between LR operation and not LR operation may be performed when the preconfigured condition is fulfilled.

In other words, when the preconfigured condition is fulfilled, the circuity may, for example, transition to the low power operation. This may be the case when the UE receives the reference signal while not performing the low power operation.

Moreover, when the preconfigured condition is fulfilled, the circuity may, for example, determine to remain in the low power operation before performing the low power operation. This may be the case when the UE receives the reference signal while performing the low power operation.

In a first exemplary implementation, the transitioning to the low power operation may be, for example, a transitioning from a main radio operation to said low power operation, when the preconfigured condition is fulfilled. Such an exemplary main radio operation may include performing a measurement based on the MR reference signal.

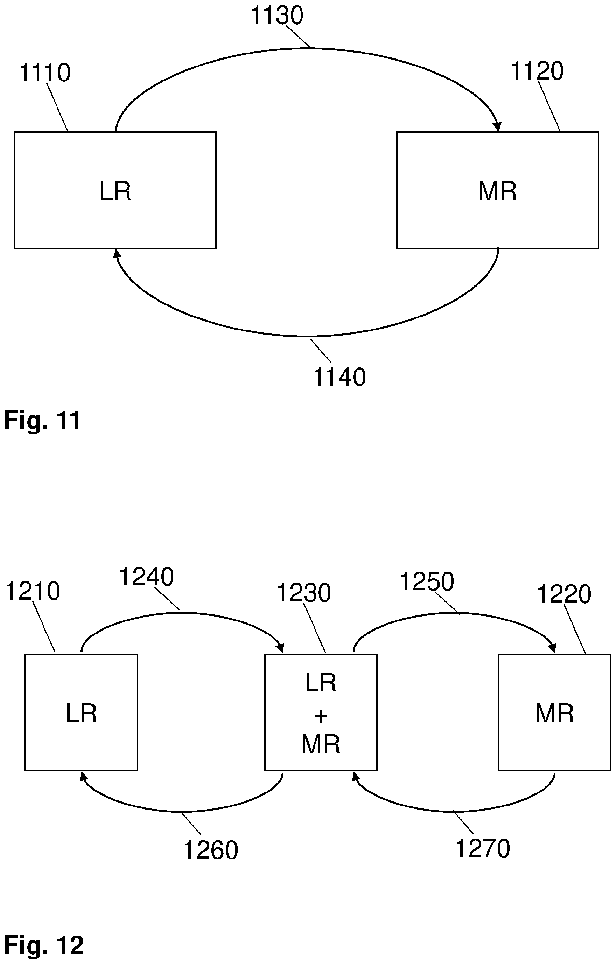

Such a transitioning according to the first exemplary implementation is exemplarily illustrated as a state machine of two states in **Fig. 11****.** The two states are represented by the LR operation 1110 and the MR operation 1120. When the preconfigured condition, which is a first preconfigured condition, is fulfilled the UE transitions 1140 from the MR operation to the LR operation. For example, the first preconfigured condition may include whether a MR measurement result is higher than a preconfigured threshold. Such a threshold may be defined by a standard, a configuration indication received by the UE, or the like.

For example, such a transitioning to the LR operation may save UE power by offloading measurement to LR operation when the channel condition is good, e.g. not cell edge or the like.

When a second preconfigured condition is fulfilled, the UE according to the exemplary implementation in Fig. 11 may transition 1130 from the LR operation to the MR operation. For example, the second preconfigured condition may include whether a LR measurement result is lower than a predefined threshold, which may be different from the threshold for the transitioning from the MR operation to the LR operation. Similarly as above, such a threshold for the transitioning from the LR operation to the MR operation may be defined by a standard, a configuration that is received by the UE, or the like.

For example, such a transitioning to the MR operation may ensure an accuracy performance of a measurement. Thus, by switching of the states based on a preconfigured condition facilitates UE power saving and maintaining acceptable measurement performance.

However, the present disclosure is not limited to the exemplary conditions according to the exemplary implantation in Fig. 11 for transitioning to and from the LR operation. In general, in the determining whether the result of the first measurement fulfills the preconfigured condition, the UE may determine whether one or more out of a set of criteria is fulfilled. The predetermined condition may be fulfilled if, for example, at least one of these criteria is fulfilled, a selected subset of these criteria is fulfilled, or all of these criteria are fulfilled.

In the following possible candidates for such criteria within said set of criteria are discussed. The set of criteria may include one or more of said exemplary criteria, including any combination thereof.

For example, the set of criteria for the predetermined condition for transitioning to the LR operation may include, as a first exemplary criterion, a stationary criterion. Such stationary criterion may be based on a determination of the mobility of the UE. For example, for such a stationary criterion a measurement result (such as e.g. RSRP, RSRQ, or SINR) is constant or with limited variance within a period. Such a limited variance may be defined by a standard, a configuration indication received by the UE, or the like. For example, the *lowMobilityEvaluation* sequence indicates the criteria for a UE to detect low mobility, in order to relax measurement requirements for cell reselection (see 3GPP TS 38.304, clause 5.2.4.9.1).

For example, the set of criteria for the predetermined condition for transitioning to the LR operation may include, as a second exemplary criterion, a non-cell-edge criterion. Such non-cell-edge criterion may be based on a determination whether a UE is at a cell edge. For example, for such a non-cell-edge criterion a measurement result (e.g. RSRP, RSRQ, or SINR) is higher than a threshold. Such a threshold may be defined by a standard, a configuration indication received by the UE, or the like. For example, the *cellEdgeEvaluation* sequence indicates the criteria for a UE to detect that it is not at cell edge, in order to relax measurement requirements for cell reselection (see 3GPP TS 38.304, clause 5.2.4.9.2).

For example, as a third exemplary criterion, the set of criteria for the predetermined condition for transitioning to the LR operation may include that, in case the first measurement that is performed by the UE is a measurement of a serving cell, which is performed in the low power operation, said measurement of the serving cell is higher than a first preconfigured threshold. Said first threshold may be defined by a standard, a configuration indication received by the UE, or the like. In other words, in case the first measurement is a measurement in LR operation, the measurement is required to be higher than a (preconfigured) threshold in order to remain in the low power operation, in case said condition is fulfilled.

For example, as a fourth exemplary criterion, the set of criteria for the predetermined condition for transitioning to the LR operation may include that, in case the first measurement is a measurement of a serving cell, which is performed not in the low power operation, said measurement of the serving cell is higher than a second preconfigured threshold. Said second threshold may be defined by a standard, a configuration indication received by the UE, or the like. In otherwords, in case the first measurement is a measurement performed while not being in LR operation, the measurement is required to be higher than a (preconfigured) threshold in order to transition in the low power operation, in case said condition is fulfilled. For example, in case the UE is performing a MR operation and the first measurement is based on a MR reference signal,

For example, as a fifth exemplary criterion, the set of criteria for the predetermined condition for transitioning to the LR operation may include that, in case the first measurement is a measurement of a serving cell, which is performed in low power operation, a gap between said measurement of the serving cell and a measurement of a neighboring cell is higher than a third preconfigured threshold. Said third threshold may be defined by a standard, a configuration indication received by the UE, or the like.

For instance, in case of the fifth exemplary criterion, the UE may perform the first measurement as a measurement of a serving cell. Moreover, the UE may perform a second measurement in a neighboring cell. For example, the gap between the measurement of the serving cell and the measurement of a neighboring cell corresponds to a difference between a result of the measurement of the serving cell and a result of the measurement of a neighboring cell. In case, said difference is higher than the third preconfigured threshold, the UE performs low power operation.

For instance, in the case of the fifth exemplary criterion, the UE may perform a second measurement in each of a neighboring cell out of a plurality of neighboring cells. Moreover, the UE may obtain a highest measurement out of the second measurements of the measured neighboring cells. The gap between the measurement of the serving cell and the highest measurement from the second measurements may correspond to a difference between a result of the measurement of the serving cell and the obtained highest result of a second measurement out of the second measurements in the plurality of neighboring cells. In case, said difference is higher than the third preconfigured threshold, the UE performs low power operation.

For example, as a sixth exemplary criterion, the set of criteria for the predetermined condition for transitioning to the LR operation may include that, in case the first measurement is a measurement, which is performed in low power operation, a gap between said measurement and a measurement, which is performed not in the low power operation, is smaller than a fourth preconfigured threshold. Said fourth threshold may be defined by a standard, a configuration indication received by the UE, or the like.

For instance, in case of the sixth exemplary criterion, the UE may perform the first measurement as a measurement, which is performed in low power operation. Moreover, the UE may perform a second measurement, which is performed not in the low power operation. The gap between the measurement while performing the LR operation and the measurement while not performing the LR operation corresponds to a difference between a result of the measurement while performing the LR operation and a result of the measurement while not performing the LR operation. In case, said difference is smaller than the fourth preconfigured threshold, the UE performs low power operation.

Such set of criteria for performing LR operation may be applicable for the first exemplary implementation as well as for any other exemplary implementation described throughout the present disclosure.

In the first exemplary implementation, the respective thresholds for entering and leaving the low power operation state may be different. In addition, the respective thresholds for entering and leaving the main operation state may be different.

Moreover, a UE performing low power operation may transition to a different operational mode. For example in the first exemplary implementation, the UE, in particular the circuitry included in the UE, may transition to the main radio operation (MR), when a preconfigured condition for transitioning to the main radio operation is fulfilled for the measurement based on the LR reference signal. Such a main radio operation according to the first exemplary implementation may include performing a measurement based on a MR reference signal at a first periodicity. For example, such a first periodicity may be configured by a standard, a configuration indication received by the UE, or the like. For example, the periodicity may be 60 or 600 DRX cycles.

The length of a DRX cycle may be fixed by a standard or configured by a higher layer, such as, for example, a RRC message or a SIB.

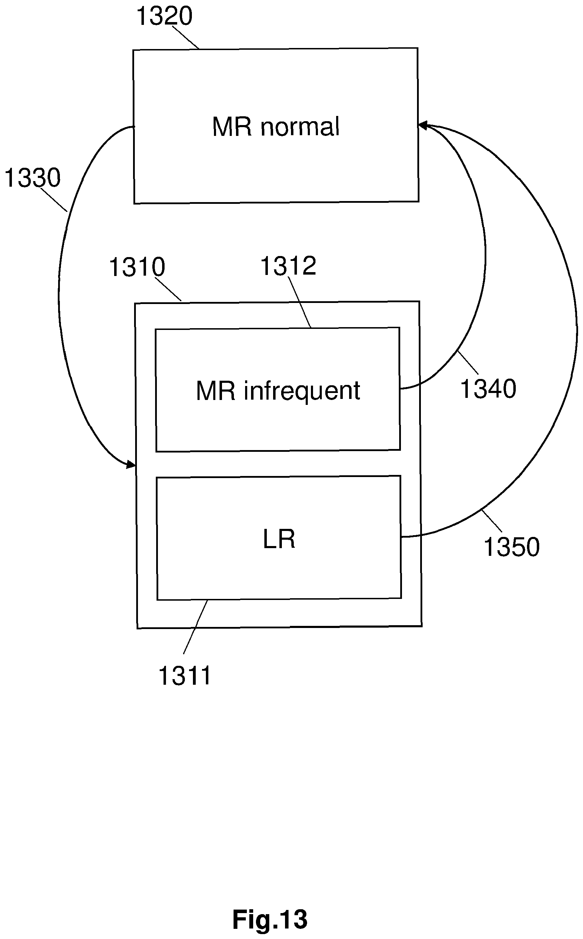

In **Fig. 13****,** a second exemplary implementation is illustrated.

The second exemplary implementation may be described as a state machine with two states 1310 and 1320, wherein one of these states includes two sub-states, an low power operation 1311 and an infrequent main operation 1312. In said second exemplary implementation, a transitioning 1330 to the low power operation 1310 is analogously as in the first exemplary implementation.

The sub-state 1312 of infrequent MR measurement is a periodic based operation, which may be independent from the LR measurement in the low power sub-state 1311. The operation frequency of the infrequent MR measurement may be relaxed with longer periodicity compared with the LR measurement in the low power operation sub-state 1311 and/or the MR measurement in the "normal" MR operation 1320, e.g., once per 60 or 600 DRX cycles. Therefore, the UE may save power.

In other words, in said second exemplary implementation, when performing the low power operation 1310, a measurement based on the LR reference signal is performed at a second periodicity. In addition in the low power operation 1310 according to the third exemplary embodiment, a measurement based on a MR reference signal is performed at a third periodicity.

Moreover, in the exemplary embodiment the main radio operation includes performing a measurement based on a MR reference signal at a fourth periodicity. The measurement based on a MR reference signal in the main radio operation 1030 may be performed more frequently than a measurement based on a MR reference signal in the low power operation 1310.

In the second exemplary implementation, the UE may transition 1340 or 1350 to the main radio operation1320, when either a first preconfigured condition for transitioning 1350 to the main radio operation is fulfilled for the measurement based on the LR reference signal or a second preconfigured condition for transitioning 1340 to the main radio operation is fulfilled for the measurement based on the MR reference signal.

Such a preconfigured condition for transitioning to the main radio operation, including the first preconfigured condition for transitioning to the main radio operation and the second preconfigured condition for transitioning to the main radio operation, may include one or more criteria out of a set of criteria.

For example, as a first exemplary criterion for transitioning to the MR operation, the set of criteria for a predetermined condition for transitioning to the MR operation may include a non-stationary criterion. Such non-stationary criterion may be based on a determination of the mobility of the UE. For example, for such a non-stationary criterion a measurement result (such as e.g. RSRP, RSRQ, or SINR) may have a larger variance within a period than a preconfigured threshold. Such a preconfigured threshold for the variance may be defined by a standard, a configuration indication received by the UE, or the like.

For example, the set of criteria for the predetermined condition for transitioning to the MR operation may include, as a second exemplary criterion for transitioning to the MR operation, a cell-edge criterion. Such cell-edge criterion may be based on a determination whether a UE is at a cell edge. For example, for such a cell-edge criterion a measurement result (e.g. RSRP, RSRQ, or SINR) is lower than a threshold. Such a threshold for the cell-edge criterion may be defined by a standard, a configuration indication received by the UE, or the like.

For example, as a third exemplary criterion for transitioning to the MR operation, the set of criteria for the predetermined condition for transitioning to the MR operation may include that a measurement of a serving cell, which is performed in the low power operation, is lower than a fifth preconfigured threshold. Said fifth threshold may be defined by a standard, a configuration indication received by the UE, or the like.

For example, as a fourth exemplary criterion for transitioning to the MR operation, the set of criteria for the predetermined condition for transitioning to the MR operation may include that a gap between a measurement, which is performed based on LR reference signals, and a measurement, which is performed based on MR reference signals, is larger than a sixth preconfigured threshold. Said sixth threshold may be defined by a standard, a configuration indication received by the UE, or the like. The gap between the measurement based on LR reference signals and the measurement based on MR reference signals corresponds to a difference between a result of the measurement based on LR reference signals and a result of the measurement based on MR reference signals. In case, said difference is larger than the sixth preconfigured threshold, the UE performs main radio operation.

For example, as a fifth exemplary criterion for transitioning to the MR operation, the set of criteria for the predetermined condition for transitioning to the MR operation may include that, in case the first measurement is a measurement of a serving cell, a gap between said measurement of the serving cell and a measurement of a neighboring cell is lower than a seventh preconfigured threshold. Said seventh threshold may be defined by a standard, a configuration indication received by the UE, or the like.

For instance, in case of the fifth exemplary criterion for transitioning to the MR operation, the UE may perform the first measurement as a measurement of a serving cell. Moreover, the UE may perform a second measurement in a neighboring cell. For example, the gap between the measurement of the serving cell and the measurement of a neighboring cell corresponds to a difference between a result of the measurement of the serving cell and a result of the measurement of a neighboring cell. In case, said difference is lower than the seventh preconfigured threshold, the UE performs main radio operation.

For instance, in the case of the fifth exemplary criterion for transitioning to the MR operation, the UE may perform a second measurement in each of a neighboring cell out of a plurality of neighboring cells. Moreover, the UE may obtain a highest measurement out of the second measurements of the measured neighboring cells. The gap between the measurement of the serving cell and the highest measurement from the second measurements may correspond to a difference between a result of the measurement of the serving cell and the obtained highest result of a second measurement out of the second measurements in the plurality of neighboring cells. In case, said difference is lower than the seventh preconfigured threshold, the UE performs main radio operation.

Said set of criteria for transitioning to MR operation according to the second exemplary implementation may also be applicable in addition or as alternative criteria for the predetermined conditions for transitioning to the MR operation according to any other exemplary implementation herein, especially for the above describes first exemplary implementation as well as the subsequent third exemplary implementation.

A third exemplary implementation is illustrated in **Fig. 12****.** A transitioning according to the third exemplary implementation is exemplarily illustrated as a state machine of three states. The three states are represented by the LR operation 1210, the MR operation 1220 and an intermediate operation 1230. When the preconfigured condition, which is a first preconfigured condition, is fulfilled the UE transitions 1260 from the intermediate operation to the LR operation.

Such an intermediate operation may include performing a measurement based on the LR reference signal as well as performing a measurement based on the MR reference signal. the intermediate operation is not limited to said MR and/or LR measurement. In general, the intermediate operation includes at least performing a measurement based on the LR reference signal and performing a measurement based on the MR reference signal. In other words, the intermediate operation may include additional functionalities.

For example, in the intermediate operation, a measurement based on a MR reference signal may be performed less frequent than a measurement based on a MR reference signal in the main radio operation. For example, in the intermediate operation, a measurement based on a LR reference signal may performed more frequent than a measurement based on a LR reference signal in the LR operation.

Similarly as in the low power operation 1310 according to the second exemplary embodiment, the intermediate operation 1230 according to the third exemplary embodiment may include infrequent MR measurement. The operation frequency of the infrequent MR measurement may be relaxed with longer periodicity compared with the LR measurement based on the LR reference signal in any of the intermediate state 1230 or the LR operation 1210, and/or compared with the MR measurement in the "normal" MR operation 1220, e.g., once per 60 or 600 DRX cycles. Therefore, the UE may save power.

For example, the first preconfigured condition may include whether a MR measurement result is higher than a preconfigured threshold. For example, the first preconfigured condition may include whether a gap between a LR measurement that is performed while being in the intermediate mode, and an MR measurement that is performed while being in the intermediate mode, is smaller than a preconfigured threshold. Any of said thresholds may be defined by a standard, a configuration indication received by the UE, or the like. Moreover, any criterion or any combination of criteria out of the set of criteria for performing LR operation described above for the first exemplary implementation may be applicable also for the third exemplary implementation.

In addition, when a second preconfigured condition is fulfilled, the UE according to the third exemplary implementation in Fig. 12 may transition 1270 from the MR operation 1220 to the intermediate operation 1230.

For example, the second preconfigured condition may include a stationary criterion. Such a stationary criterion may be defined analogously to the first exemplary criterion for transitioning to an LR operation, which is described in detail above.

For example, the second preconfigured condition may include a non-cell edge criterion. Such a non-cell edge criterion may be defined analogously to the second exemplary criterion for transitioning to an LR operation, which is described in detail above.

For example, the second preconfigured condition may include whether a MR measurement result is higher than an eight preconfigured threshold. Such an eight threshold for the transitioning 1270 from the MR operation 1220 to the intermediate operation 1230 may be defined by a standard, a configuration that is received by the UE, or the like.

For example, the second preconfigured condition may include that a gap between a measurement of a serving cell and a measurement of a neighboring cell being higher than a ninth preconfigured threshold. Said third threshold may be defined by a standard, a configuration indication received by the UE, or the like.

For instance, the UE may perform a measurement of a serving cell. Moreover, the UE may perform a measurement in a neighboring cell. For example, the gap between the measurement of the serving cell and the measurement of a neighboring cell corresponds to a difference between a result of the measurement of the serving cell and a result of the measurement of a neighboring cell. In case, said difference is higher than the ninth preconfigured threshold, the UE performs intermediate operation.

For instance, the UE may perform a measurement in each of a neighboring cell out of a plurality of neighboring cells. Moreover, the UE may obtain a highest measurement out of the measurements of the measured neighboring cells. The gap between the measurement of the serving cell and the highest measurement from the second measurements may correspond to a difference between a result of the measurement of the serving cell and the obtained highest result of a second measurement out of the second measurements in the plurality of neighboring cells. In case, said difference is higher than the ninth preconfigured threshold, the UE performs intermediate operation.

For example, the second preconfigured condition may include that a gap between a measurement, which is performed based on LR reference signals, and a measurement, which is performed based on MR reference signals, is smaller than a tenth preconfigured threshold. Said tenth threshold may be defined by a standard, a configuration indication received by the UE, or the like. The gap between the measurement based on LR reference signals and the measurement based on MR reference signals corresponds to a difference between a result of the measurement based on LR reference signals and a result of the measurement based on MR reference signals. In case, said difference is larger than the tenth preconfigured threshold, the UE performs intermediate operation.

Furthermore, when a third preconfigured condition is fulfilled, the UE according to the third exemplary implementation in Fig. 12 may transition 1250 from the intermediate operation 1230 to the MR operation 1220.

For example, the third preconfigured condition may include a non-stationary criterion. Such a non-stationary criterion may be defined analogously to the first exemplary criterion for transitioning to a MR operation, which is described in detail above.

For example, the third preconfigured condition may include a cell edge criterion. Such a cell edge criterion may be defined analogously to the second exemplary criterion for transitioning to an MR operation, which is described in detail above.

For example, the third preconfigured condition may include whether a MR measurement result is lower than an eleventh preconfigured threshold.

For example, the third preconfigured condition may include whether a gap between a measurement of a serving cell and a measurement of at least one neighboring cell is lower than a twelfth preconfigured threshold. Such a criterion may be defined analogously to the fifth exemplary criterion for transitioning to an MR operation.

For example, the third preconfigured condition may include whether a gap between a LR measurement and an MR measurement is larger than a thirteenth preconfigured threshold. Any of said eleventh to thirteenth preconfigured thresholds may be defined by a standard, a configuration indication received by the UE, or the like.

Moreover, when a fourth preconfigured condition is fulfilled, the UE according to the third exemplary implementation in Fig. 12 may transition 1240 from the LR operation to the intermediate operation.

For example, the fourth preconfigured condition may include a non-stationary criterion. Such a non-stationary criterion may be defined analogously to the first exemplary criterion for transitioning to a MR operation, which is described in detail above.

For example, the fourth preconfigured condition may include a cell edge criterion. Such a cell edge criterion may be defined analogously to the second exemplary criterion for transitioning to an MR operation, which is described in detail above.

For example, the fourth preconfigured condition may include whether a LR measurement result is lower than a fourteenth preconfigured threshold. Said fourteenth preconfigured threshold may be different from any of the thresholds for the transitioning from the intermediate operation to the LR operation. Similarly as above, such a fourteenth preconfigured threshold for the transitioning from the LR operation to the intermediate operation may be defined by a standard, a configuration that is received by the UE, or the like.

For example, the fourth preconfigured condition may include whether a gap between a measurement of a serving cell and a measurement of at least one neighboring cell is lower than a fifteenth preconfigured threshold. Such a criterion may be defined analogously to the fifth exemplary criterion for transitioning to an MR operation.

For example, the fourth preconfigured condition may include whether a gap between a LR measurement and an MR measurement is larger than a sixteenth preconfigured threshold. Any of said fourteenth to sixteenth preconfigured thresholds may be defined by a standard, a configuration indication received by the UE, or the like.

In general, any of the first to sixteenth preconfigured thresholds may be configured independently from each other. Any of the first to tenth preconfigured thresholds may have a same value or a different value that another threshold out of the first to tenth preconfigured thresholds. Moreover, any of said thresholds and/or the corresponding criteria may be SIB or RRC configured.

In the third exemplary implementation, the respective thresholds for entering and leaving the low power operation state may be different. Moreover, the respective thresholds for entering and leaving the intermediate operation state may be different. In addition, the respective thresholds for entering and leaving the main operation state may be different.

In other words, in the third exemplary embodiment, when a channel condition is good, LR operation may be used as much as possible for better power saving gain. When a channel condition is relatively low, MR operation may be performed to ensure the reliability of a measurement.

However, the present disclosure is not limited to the exemplary conditions according to the exemplary implantation in Fig. 12 for transitioning to and from any of the LR operation 1210, the intermediate operation 1230 and the MR operation 1220.

In a fourth exemplary implementation, which may be combined with any of the examples and other exemplary implementations herein, in particular, any of the first, the second and the third exemplary implementation, in the determining whether the result of the first measurement fulfills the preconfigured condition, the UE, in particular the circuitry, further may determine whether a preconfigured time period since a previous transition has passed.

In other words, a switching between the states may optionally be limited by a certain period, i.e., UE may be allowed to switch only after a minimum "static period". Such a "static period" or a preconfigured time period may be defined by a standard or may be configured in an indication received by the UE. For example, such criterion may be similar to the *TimeToTrigger* information element in 3GPP TS 38.331, Sec 7.1.2. A support of *TimeToTrigger* may be independently or jointly utilized with any of the criteria for transitioning to a LR operation and/or any of the criteria for transitioning to a MR operation, and/or any other criterion for switching states defined herein.

In said fourth exemplary implementation, the preconfigured condition may further include adding an offset to any preconfigured threshold. The adding of such an offset may be performed in addition or independently from the preconfigured time period since a previous transition. Such additional offset may be added to any of the thresholds included in the conditions for the transitioning between stated defined in the present disclosure, including any of the above-defined first to tenth preconfigured threshold. Such additional offsets may facilitate a hysteresis effect in order prevent unwanted rapid switching.

For example, the threshold for switching of the states may optionally be offset by an additional parameter, like legacy *IE Hysteresis,* which is a parameter used within the entry and leave condition of an event triggered reporting condition (cf. 3GPP TS 38.331, Sec 5.5.4).

In a fifth exemplary implementation, the UE receives, from a base station, a configuration for measurements and/or reporting. The received configuration may include a configuration for a measurement object. Measurement objects are explained in detail in section *UE measurements and measurement reporting.* Such a configuration may be received by the UE in an RRC connected mode. Details regarding RRC modes and RRC configurations are provided above in section *RRC connection setup and reconfiguration procedures.*

The fifth exemplary implementation may be combined with any of the examples and other exemplary implementations herein, in particular, any of the first, the second, the third and the fourth exemplary implementation or any combination thereof.

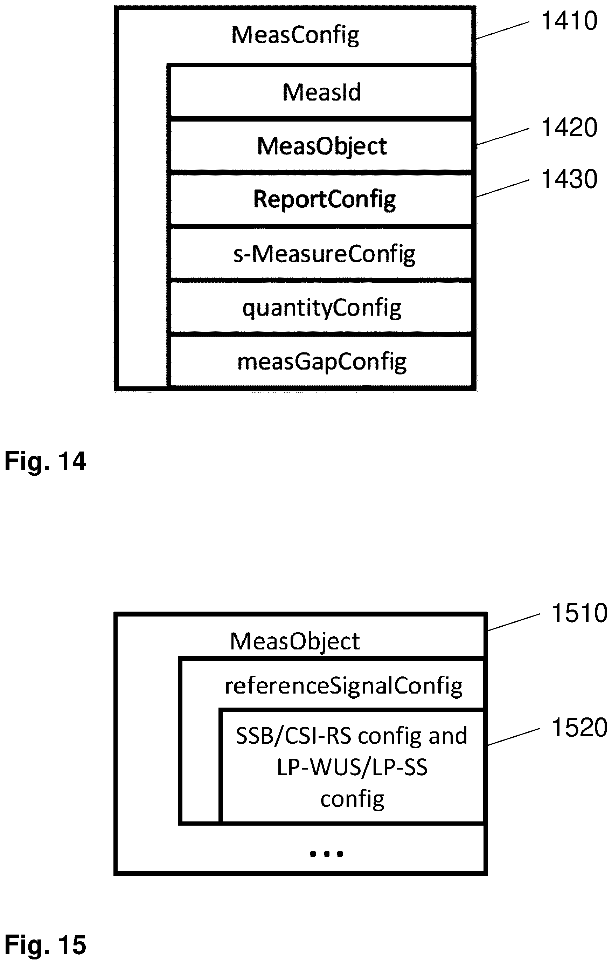

A candidate RRC information element for such a measurement configuration, i.e. a configuration for a measurement object, is shown in **Fig. 14****.** The exemplary measurement configuration 1410 includes a measurement object *MeasObject* 1420 and a report configuration *ReportConfig* 1430. The measurement object *MeasObject* 1420 may include one or more measurement objects. Moreover, the measurement configuration 1410 may include an identification *MeasID* and additional elements such as *s-MeasureConfig, quantityConfig* and *mwasGapConfig.*

*MeasID* may provide a list of measurement identities where each measurement identity links one measurement object with one reporting configuration. By configuring multiple measurement identities, it is possible to link more than one measurement object to the same reporting configuration, as well as to link more than one reporting configuration to the same measurement object.

The quantity configuration *quantityConfig* may define a measurement filtering configuration used for measurement event evaluation and related reporting, and for periodical reporting of that measurement.

Measurement gaps may be defined in *mwasGapConfig,* which relate to Periods that the UE may use to perform measurements.

In a first example according to the fifth exemplary embodiment, a measurement object includes a configuration for a MR reference signal and a configuration for a LR reference signal. For example, the measurement object may include a SSB and/or a CSI-RS resource configuration as a configuration for a MR reference signal. For example, the measurement object may include a LP-WUS and/or a LP-SS resource configuration as a configuration for a LR reference signal.

A candidate RRC information element for such a measurement object according to the first example of the fifth exemplary embodiment is shown in **Fig. 15****.** The exemplary measurement object 1510 includes a configuration for the reference signal *referenceSignalConfig,* which may include a SSB and/or a CSI-RS resource configuration and a LP-WUS and/or a LP-SS resource configuration 1520.

In other words, in said first example, LP-WUS/LP-SS based measurement is configured, additionally within a MeasObject, together with legacy SSB/CSI-RS. In a (RRM) report configured and linked with this measurement object, UE may choose to report based on one or more of the MR (legacy) and LR reference signals according to a configuration of a current operation of the UE. For example, the UE may choose to report according to an UE implementation that measurement may be based on one or multiple of the configured signals. For example, a combining and/or averaging operation may be optionally applied for measurement based on the one or multiple of the configured signals. In case, multiple measurements based on legacy and/or new signals are to be reported individually, either absolute or differential values between the two may be reported.

The first example of the fifth exemplary implementation may provide, for example, less impact on the specification. Such an implementation may facilitate more flexibility for an UE to select a reporting, or for network to decide on a reporting for the UE.

In a second example according to the fifth exemplary embodiment, the configuration may include a first measurement object and a second measurement object. Such a first measurement object may include a configuration of a MR reference signal, such as, for example, a SSB and/or a CSI-RS resource configuration. Such a second measurement object may include a configuration of a LR reference signal, such as, for example, a LP-WUS and/or a LP-SS resource configuration

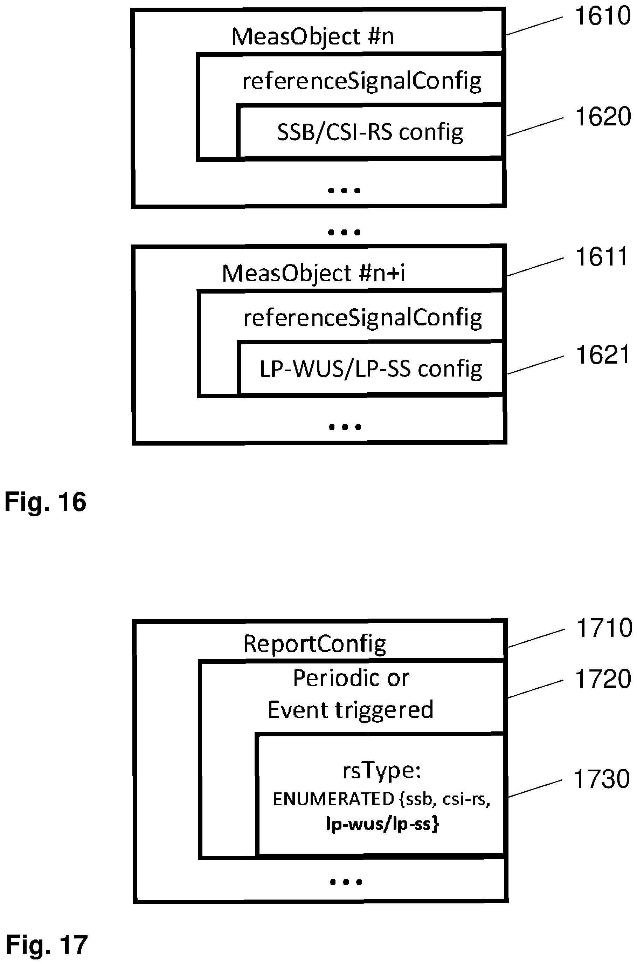

A candidate RRC information element for such a measurement object according to the second example of the fifth exemplary embodiment is shown in **Fig. 16****.** An exemplary first measurement object 1610 includes a configuration for the reference signal *referenceSignalConfig,* which may include a SSB and/or a CSI-RS resource configuration 1620. An exemplary second measurement object 1611 includes a configuration for the reference signal *referenceSignalConfig,* which may include a LP-WUS and/or a LP-SS resource configuration 1621. The measurement object *MeasObject* 1420 illustrated in Fig. 14 may include one or more measurement objects, including the first measurement object 1610 and the second measurement object 1611.

In other words, in said second example, LP-WUS/LP-SS based measurement may be configured in a separate *MeasObject* 1611. In the *MeasConfig* 1410, if one *ReportConfig* 1430 is linked with multiple MeasObject, with LR and MR (legacy) signal, respectively, the UE may choose to report measurement results similarly as in the first example. For example, the UE may choose to report based on one or more of the MR (legacy) and LR reference signals according to a configuration of a current operation of the UE. For example, the UE may choose to report according to an UE implementation that measurement may be based on one or multiple of the configured signals. For example, a combining and/or averaging operation may be optionally applied for measurement based on the one or multiple of the configured signals. In case, multiple measurements based on legacy and/or new signals are to be reported individually, either absolute or differential values between the two may be reported.

The second example of the fifth exemplary implementation may provide a clear separation of LP-WUS/LP-SS resource configuration for measurement, apart from legacy UEs. Such an implementation may simplify a backwards compatibility.

As already mentioned above, the UE may report to a base station based on a measurement result. The UE, in particular the circuitry, may further obtain a report based on a result of a measurement based on one or more of the MR reference signal or the LR reference signal.

Moreover, in a third example of the fifth exemplary implementation, which may be combined with any of the first example or the second example according to the fifth exemplary implementation, the UE, in particular the circuitry, may further receive a report configuration Such a report indication may indicates a reference signal for reporting to a base station, said reference signal is included in at least one measurement object.

A candidate RRC information element for such a report configuration *ReportConfig* 1420 according to the third example of the fifth exemplary embodiment is shown in **Fig. 17****.** The exemplary report configuration 1710 includes an indication 1720 whether the reporting is a periodic reporting or an event-triggered reporting. Moreover, a type of a reference signal *rsType* 1730 for reporting, such as SSB, CSI-RS, LP-WUS, or LP-SS, is specified in an enumerated list.

In other words, *ReportConfig* may decide which RS may be used for a measurement report. In the *MeasConfig* 1410, if one *ReportConfig* 1430 is linked with multiple *MeasObject* 1420, with new and legacy signal, respectively, the UE may choose to report measurement results similarly as in the first example. For example, the UE may choose to report based on one or more of the MR (legacy) and LR reference signals according to a configuration of a current operation of the UE. For example, the UE may choose to report according to an UE implementation that measurement may be based on one or multiple of the configured signals. For example, a combining and/or averaging operation may be optionally applied for measurement based on the one or multiple of the configured signals. In case, multiple measurements based on legacy and/or new signals are to be reported individually, either absolute or differential values between the two may be reported.

As mentioned above, the report may be an event-triggered report. Such an event-triggered report may be triggered in case when one or more of the criteria for any of the preconfigured conditions for transitioning between operational modes are fulfilled. A report may be triggered if, for example, at least one of these criteria is fulfilled, a selected subset of these criteria is fulfilled, or all of these criteria are fulfilled.

For example, a report may be triggered in case when one or more of the following is fulfilled:
- a stationary criterion, which is based on a determination of the mobility of the UE;
- a non-cell-edge criterion, which is based on a determination whether a UE is at a cell edge;
- in case the first measurement is a measurement of a serving cell, which is performed in the low power operation, said measurement of the serving cell being higher than a first preconfigured threshold,
- in case the first measurement is a measurement of a serving cell, which is performed not in the low power operation, said measurement of the serving cell being higher than a second preconfigured threshold,
- in case the first measurement is a measurement of a serving cell, which is performed in low power operation, a gap between said measurement of the serving cell and a measurement of a neighboring cell being higher than a third preconfigured threshold,
- in case the first measurement is a measurement, which is performed in low power operation, a gap between said measurement and a measurement, which is performed not in the low power operation, being smaller than a fourth preconfigured threshold.

For example, the UE may perform a Layer-1, L1, LR reference signal-based measurement report or a Layer-3, L3, LR reference signal-based measurement report. Any of said L1 and L3 reports may be an aperiodic report, a semi-persistent report or a periodic report. Such configuration facilitated a Layer-1 and or a Layer-3 based reporting of a measurement result.

Moreover, a differential report between MR and LR measurement may be applied. In other words, the L1 LR reference signal-based measurement report and/or the L3 LR reference signal-based measurement report may include a differential report between a LR reference signal-based measurement and a MR reference signal-based measurement. Which reference signal provides the reference value, and which reference signal provides a differential part may depend on which of MR or LR based measurement is configured to be performed more frequently. For example, such an association regarding reference value and differential part may be based on the states in any of the first to third exemplary implementations.

Furthermore, MR- and LR-based report may be configured in a same or in different CSI reportConfig.

If these are configured in a same CSI reportConfig, both, MR- and LR-based report may be reported in a same occasion. For example, MR- and LR-based report may be encoded either separately or with differential value, in the L1 CSI report.

In other words, the circuity may be configured to report a LR reference signal-based measurement and a MR reference signal-based measurement in a same transmission occasion using a L1, LR reference signal-based measurement report or a L3, LR reference signal-based measurement report.

As mentioned above, a network node (base station) is also provided. The base station 660, in particular, the circuitry 680, obtains a configuration for a condition for a measurement based on a predetermined reference signal, wherein when the measurement, which is performed by a user equipment, UE, fulfills said condition, the UE performs a low power operation.

In other words, the base station may determine one or more reference signals for a MR operation and/or one or more reference signals for a LR operation. A configuration for a condition for a measurement based on any of said determined reference signals may be obtained.

Such a condition for a measurement may include any of the preconfigured conditions and/or criteria described above for the UE.

For example, the base station may determine capabilities of UE regarding low power operation. For example, the base station may receive, from the UE, an indication for use of MR and/or LR operation. For example, the base station may receive a measurement report from UE. Based on said received report, the base station may determine suitable configurations and/or reference signals for MR and/or LR operation.

Furthermore, the base station transmits an indication of said configuration to the UE. Such an indication may be included in an RRC configuration or any other suitable configuration that is transmitted to the UE.

Moreover, in a first exemplary implementation for a base station, the base station 660, in particular, the transmitter may further transmit a first reference signal, and a second reference signal. The first reference signal and the second reference signal may be of a same type or may be of a different type. For example, the first reference signal may be a MR reference signal as defined above for the UE. For example, the first reference signal may be a LR reference signal as defined above for the UE. For example, the second reference signal may be a reference signal for low power operation of the UE. In other words, the second reference signal may be a LR reference signal as defined above for the UE.

Furthermore, in a second exemplary implementation for a base station the base station may further transmit a first reference signal. In addition, the base station may receive an indication from the UE. Such an indication may indicate an operation performed by the UE. In other words, the UE may report to the base station an indication for performing low power operation and/or an indication for performing not a low power operation.

Based on such received indication, the transmitter may be instructed by the circuity to transmit a second reference signal. The transmitter further may transmit said second reference signal.

For example, the UE may transmit to the base station an indication of a measurement result, e.g. a report as described above. In said second exemplary implementation for a base station, the base station may obtain an operational mode of the UE based on the received indication. In case the indication indicates that the UE performs a low power operation, the second reference signal may be a LR reference signal. In case the indication indicates that the UE performs a MR operation, the second reference signal may be a MR reference signal,

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Furthermore, the various embodiments may also be implemented by means of software modules, which are executed by a processor or directly in hardware. Also a combination of software modules and a hardware implementation may be possible. The software modules may be stored on any kind of computer-readable storage media. In particular, according to another implementation, a non-transitory computer-readable recording medium is provided. The recording medium stores a program which, when executed by one or more processors, causes the one or more processors to carry out the steps of a method according to the present disclosure.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

It should be further noted that the individual features of the different embodiments may individually or in arbitrary combination be subject matter to another embodiment. It would be appreciated by a person skilled in the art that numerous variations and/or modifications may be made to the present disclosure as shown in the specific embodiments. The present embodiments are, therefore, to be considered in all respects to be illustrative and not restrictive.

### Further Aspects

According to a first aspect, a user equipment (UE) is provided. The UE comprises a receiver and a circuitry. The receiver in operation: receives a reference signal. The circuitry in operation: performs a first measurement based on the reference signal; determines whether a result of the first measurement fulfills a preconfigured condition; and when the preconfigured condition is fulfilled, performs a low power operation.

According to a second aspect provided in addition to the first aspect, when the preconfigured condition is fulfilled, the circuity, in operation, further determines to remain in the low power operation, or transitions to the low power operation before performing the low power operation, and when performing a low power operation, the circuity, in operation, further performs a second measurement based on a low power radio, LR, reference signal.

According to a third aspect provided in addition to any of the first or second aspects, when the UE performs the low power operation, the receiving of the reference signal includes a receiving of the low power radio, LR, reference signal, and when the UE does not perform the low power operation, the receiving of the reference signal includes a receiving of a main radio, MR, reference signal.

According to a fourth aspect provided in addition to any of the first to third aspects, in the determining whether the result of the first measurement fulfills the preconfigured condition, the circuity determines whether one or more of the following is fulfilled:
- a stationary criterion, which is based on a determination of the mobility of the UE;
- a non-cell-edge criterion, which is based on a determination whether a UE is at a cell edge;
- in case the first measurement is a measurement of a serving cell, which is performed in the low power operation, said measurement of the serving cell being higher than a first preconfigured threshold,
- in case the first measurement is a measurement of a serving cell, which is performed not in the low power operation, said measurement of the serving cell being higher than a second preconfigured threshold,
- in case the first measurement is a measurement of a serving cell, which is performed in low power operation, a gap between said measurement of the serving cell and a measurement of a neighboring cell being higher than a third preconfigured threshold,
- in case the first measurement is a measurement, which is performed in low power operation, a gap between said measurement and a measurement, which is performed not in the low power operation, being smaller than a fourth preconfigured threshold.

According to a fifth aspect provided in addition to any of the second to fourth aspects, the transitioning to the low power operation is a transitioning from a main radio operation to said low power operation, when the preconfigured condition is fulfilled, wherein the main radio operation includes performing a measurement based on the MR reference signal.

According to a sixth aspect provided in addition to the fifth aspect, the circuitry, in operation, further, transitions to the main radio operation, when a preconfigured condition for transitioning to the main radio operation is fulfilled for the measurement based on the LR reference signal, wherein the main radio operation includes performing a measurement based on a MR reference signal at a first periodicity.

According to a seventh aspect provided in addition to the fifth aspect, wherein the circuitry, in operation, further, when performing low power operation, performs a measurement based on the LR reference signal at a second periodicity and performs a measurement based on a MR reference signal at a third periodicity, and transitions to the main radio operation, when either a first preconfigured condition for transitioning to the main radio operation is fulfilled for the measurement based on the LR reference signal or a second preconfigured condition for transitioning to the main radio operation is fulfilled for the measurement based on the MR reference signal, wherein the main radio operation includes performing a measurement based on a MR reference signal at a fourth periodicity.

According to an eighth aspect provided in addition to any of the sixth or seventh aspects, a preconfigured condition for transitioning to the main radio operation, including the first preconfigured condition for transitioning to the main radio operation and the second preconfigured condition for transitioning to the main radio operation, includes one or more of:
- a non-stationary criterion,
- a cell edge criterion,
- a measurement of a serving cell being lower than a fifth preconfigured threshold,
- a gap between a measurement based on a LR reference signal and a measurement based on a MR reference signal being larger than a sixth preconfigured threshold,
- a gap between a measurement of a serving cell and a measurement of a neighboring cell being lower than a seventh preconfigured threshold.

According to a ninth aspect provided in addition to any of the second to fourth aspects, the circuity, in operation, further transitions from an intermediate operation to the low power operation, when the preconfigured condition, which is a first preconfigured condition for transitioning to the low power operation, is fulfilled, transitions from a main radio operation to the intermediate operation, when a second preconfigured condition for transitioning to the intermediate power operation is fulfilled, wherein the intermediate operation includes at least performing a measurement based on the LR reference signal and performing a measurement based on the MR reference signal, the main radio operation includes performing a measurement based on the MR reference signal, and the second preconfigured condition includes one or more of
- a stationary criterion,
- a non-cell-edge criterion,
- a measurement based on a MR reference signal being higher than an eight preconfigured threshold,
- a gap between a measurement of a serving cell and a measurement of a neighboring cell being higher than a ninth preconfigured threshold,
- a gap between a measurement based on a LR reference signal and a measurement based on a MR reference signal being smaller than a tenth preconfigured threshold.

According to a tenth aspect provided in addition to the ninth aspects, the circuity, in operation, further transitions from the intermediate operation to the main radio operation, when a third preconfigured condition is fulfilled, transitions from the low power operation to the intermediate operation, when a fourth preconfigured condition is fulfilled, and wherein the third preconfigured condition includes one or more of
- a non-stationary criterion,
- a cell-edge criterion,
- a measurement based on the MR reference signal being lower than an eleventh preconfigured threshold,
- a gap between a measurement of a serving cell and a measurement of a neighboring cell being lower than a twelfth preconfigured threshold, and
- a gap between a measurement based on the MR reference signal and a measurement based on the LR reference signal being larger than a thirteenth preconfigured threshold;
and the fourth preconfigured condition includes one or more of
- a non-stationary criterion,
- a cell-edge criterion,
- a measurement based on a LR reference signal being lower than a fourteenth preconfigured threshold,
- a gap between a measurement of a serving cell and a measurement of a neighboring cell being lower than a fifteenth preconfigured threshold,
- a gap between a measurement based on a LR reference signal and a measurement based on a MR reference signal being smaller than a sixteenth preconfigured threshold.

According to a eleventh aspect provided in addition to any of the ninth to tenth aspects, in the intermediate operation, the measurement based on a MR reference signal is performed less frequent than the measurement based on a MR reference signal in the main radio operation.

According to a twelfth aspect provided in addition to any of the first to eleventh aspects, the LR reference signal includes at least one or more of
- a low power wake-up signal LP-WUS,
- a low power synchronization signal, LP-SS,
and/or
the MR reference signal includes at least one or more of
- a synchronization signal block, SSB,
- a channel state information reference signal, CSI-RS,

According to a thirteenth aspect provided in addition to any of the fourth to twelfth aspects,in the determining whether the result of the first measurement fulfills the preconfigured condition, the circuity, in operation, further determines whether a preconfigured time period since a previous transition has passed and/or the preconfigured condition further includes adding an offset to any preconfigured threshold

According to a fourteenth aspect provided in addition to any of the first to thirteenth aspects, when the UE is in an RRC connected mode, the circuitry, in operation, further receives, from a base station, a configuration for a measurement object, and said measurement object includes a SSB and/or a CSI-RS resource configuration, and a LP-WUS and/or a LP-SS resource configuration; or the configuration includes a first measurement object and a second measurement object, wherein the first measurement object includes a SSB and/or a CSI-RS resource configuration and the second measurement object includes a LP-WUS and/or a LP-SS resource configuration.

According to a fifteenth aspect provided in addition to any of the first to fourteenth aspects, when the UE is in an RRC connected mode, the circuitry, in operation, further obtains a report based on a result of a measurement based on one or more of the MR reference signal or the LR reference signal the UE further comprising a transmitter, which in operation, transmits the report to a base station.

According to a sixteenth aspect provided in addition to any of the fourteenth or fifteenth aspects, the circuitry, in operation, further receives a report configuration, which indicates a reference signal for reporting to a base station, said reference signal is included in at least one measurement object.

According to a seventeenth aspect provided in addition to any of the fourteenth to sixteenth aspects, the report is an event triggered report, which is triggered in case when one or more of the following is fulfilled:
- a stationary criterion, which is based on a determination of the mobility of the UE;
- a non-cell-edge criterion, which is based on a determination whether a UE is at a cell edge;
- in case the first measurement is a measurement of a serving cell, which is performed in the low power operation, said measurement of the serving cell being higher than a first preconfigured threshold,
- in case the first measurement is a measurement of a serving cell, which is performed not in the low power operation, said measurement of the serving cell being higher than a second preconfigured threshold,
- in case the first measurement is a measurement of a serving cell, which is performed in low power operation, a gap between said measurement of the serving cell and a measurement of a neighboring cell being higher than a third preconfigured threshold,
- in case the first measurement is a measurement, which is performed in low power operation, a gap between said measurement and a measurement, which is performed not in the low power operation, being smaller than a fourth preconfigured threshold.

According to a eighteenth aspect provided in addition to any of the fifteenth to seventeenth aspects, the circuity, in operation, is configured to perform a Layer-1, L1, LR reference signal-based measurement report or a Layer-3, L3, LR reference signal-based measurement report, which is one of an aperiodic report, a semi-persistent report or a periodic report.

According to a nineteenth aspect provided in addition to the eighteenth aspect, any of the L1 LR reference signal-based measurement report and the L3 LR reference signal-based measurement report includes a differential report between a LR reference signal-based measurement and a MR reference signal-based measurement.

According to a twentieth aspect provided in addition to any of the sixteenth to nineteenth aspects, the circuity, in operation, is configured to report a LR reference signal-based measurement and a MR reference signal-based measurement in a same transmission occasion.

According to a twenty-first aspect, a network node is provided. The network node comprises a transmitter and a circuitry. The circuity in operation: obtains a configuration for a condition for a measurement based on a predetermined reference signal, wherein when the measurement, which is performed by a user equipment, UE, fulfills said condition, the UE performs a low power operation, the transmitter, in operation: transmits an indication of said configuration to the UE.

According to a twenty-second aspect provided in addition to the twenty-first aspect, the transmitter, in operation, further transmits a first reference signal and a second reference signal, wherein the second reference signal is a reference signal for low power operation of the UE.

According to a twenty-third aspect provided in addition to the twenty-first aspect, the transmitter, in operation, further transmits a first reference signal, and the network node further comprises a receiver, which in operation, receives an indication from the UE, the indication indicating an operation performed by the UE, wherein the circuitry in operation further obtains the indication and obtains, based on the received indication, an instruction for the transmitter to transmit a second reference signal, the transmitter, in operation, further transmits the second reference signal.

According to a twenty-fourth aspect provided in addition to the twenty-third aspect, the indication indicates that the UE performs a low power operation and the second reference signal is a low power radio, LR, reference signal, or the indication indicates that the UE does not perform a low power operation and the transmitting of the second reference signal includes a transmitting of a main radio, MR, reference signal.

According to a twenty-fifth aspect a method for a user equipment, UE, is provided. The method comprises receiving a reference signal; performing a first measurement based on the reference signal; determining whether a result of the first measurement fulfills a preconfigured condition; and when the preconfigured condition is fulfilled, performing a low power operation.

According to a twenty-sixth aspect a method for a network node is provided. The method comprises obtaining a configuration for a condition for a measurement based on a predetermined reference signal, wherein when the measurement, which is performed by an user equipment, UE, fulfills said condition, the UE performs a low power operation, transmitting an indication of said configuration to the UE.

According to a twenty-seventh, an integrated circuit is provided, which, in operation, controls a process of a user equipment, the process comprising the following steps performed by the user equipment:
- receiving a reference signal;
- performing a first measurement based on the reference signal;
- determining whether a result of the first measurement fulfills a preconfigured condition; and
- when the preconfigured condition is fulfilled, performing a low power operation.

According to a twenty-eighth aspect, an integrated circuit is provided, which, in operation, controls a process of a network node, the process comprising the following steps performed by the network node:
- obtaining a configuration for a condition for a measurement based on a predetermined reference signal, wherein when the measurement, which is performed by an user equipment, UE, fulfills said condition, the UE performs a low power operation; and
- transmitting an indication of said configuration to the UE.

According to a twenty-ninth aspect, a program stored on a storage medium and including code instructions, which, when executed on one or more processors of a user equipment, cause the one or more processors to execute the following steps:
- receiving a reference signal;
- performing a first measurement based on the reference signal;
- determining whether a result of the first measurement fulfills a preconfigured condition; and
- when the preconfigured condition is fulfilled, performing a low power operation.

According to a thirtieth aspect, a program stored on a storage medium and including code instructions, which, when executed on one or more processors of a network node, cause the one or more processors to execute the following steps:
- obtaining a configuration for a condition for a measurement based on a predetermined reference signal, wherein when the measurement, which is performed by an user equipment, UE, fulfills said condition, the UE performs a low power operation; and
- transmitting an indication of said configuration to the UE.

## Claims

1. A user equipment, UE, comprising:
a receiver, which in operation:
receives a reference signal;
circuitry, which in operation:
performs a first measurement based on the reference signal;
determines whether a result of the first measurement fulfills a preconfigured condition; and
when the preconfigured condition is fulfilled, performs a low power operation,.

2. The UE according to claim 1, wherein, when the preconfigured condition is fulfilled, the circuity, in operation, further
- determines to remain in the low power operation, or
- transitions to the low power operation
before performing the low power operation, and
when performing a low power operation, the circuity, in operation, further performs a second measurement based on a low power radio, LR, reference signal.

3. The UE according to any of claims 1 or 2, wherein
when the UE performs the low power operation, the receiving of the reference signal includes a receiving of the low power radio, LR, reference signal, and
when the UE does not perform the low power operation, the receiving of the reference signal includes a receiving of a main radio, MR, reference signal.

4. The UE according to any of claims 1 to 3, wherein in the determining whether the result of the first measurement fulfills the preconfigured condition, the circuity determines whether one or more of the following is fulfilled:
- a stationary criterion, which is based on a determination of the mobility of the UE;
- a non-cell-edge criterion, which is based on a determination whether a UE is at a cell edge;
- in case the first measurement is a measurement of a serving cell, which is performed in the low power operation, said measurement of the serving cell being higher than a first preconfigured threshold,
- in case the first measurement is a measurement of a serving cell, which is performed not in the low power operation, said measurement of the serving cell being higher than a second preconfigured threshold,
- in case the first measurement is a measurement of a serving cell, which is performed in low power operation, a gap between said measurement of the serving cell and a measurement of a neighboring cell being higher than a third preconfigured threshold,
- in case the first measurement is a measurement, which is performed in low power operation, a gap between said measurement and a measurement, which is performed not in the low power operation, being smaller than a fourth preconfigured threshold.

5. The UE according to any of the claims 2 to 4, wherein the transitioning to the low power operation is a transitioning from a main radio operation to said low power operation, when the preconfigured condition is fulfilled,
wherein the main radio operation includes performing a measurement based on the MR reference signal.

6. The UE according to claim 5, wherein the circuitry, in operation, further,
transitions to the main radio operation, when a preconfigured condition for transitioning to the main radio operation is fulfilled for the measurement based on the LR reference signal,
wherein the main radio operation includes performing a measurement based on a MR reference signal at a first periodicity.

7. The UE according to claim 5, wherein the circuitry, in operation, further,
when performing low power operation, performs a measurement based on the LR reference signal at a second periodicity and performs a measurement based on a MR reference signal at a third periodicity, and
transitions to the main radio operation, when either a first preconfigured condition for transitioning to the main radio operation is fulfilled for the measurement based on the LR reference signal or a second preconfigured condition for transitioning to the main radio operation is fulfilled for the measurement based on the MR reference signal,
wherein the main radio operation includes performing a measurement based on a MR reference signal at a fourth periodicity.

8. The UE according to any of the claims 6 or 7, wherein a preconfigured condition for transitioning to the main radio operation, including the first preconfigured condition for transitioning to the main radio operation and the second preconfigured condition for transitioning to the main radio operation, includes one or more of:
- a non-stationary criterion,
- a cell edge criterion,
- a measurement of a serving cell being lower than a fifth preconfigured threshold,
- a gap between a measurement based on a LR reference signal and a measurement based on a MR reference signal being larger than a sixth preconfigured threshold,
- a gap between a measurement of a serving cell and a measurement of a neighboring cell being lower than a seventh preconfigured threshold.

9. The UE according to any of the claims 2 to 4, wherein the circuity, in operation, further
transitions from an intermediate operation to the low power operation, when the preconfigured condition, which is a first preconfigured condition for transitioning to the low power operation, is fulfilled,
transitions from a main radio operation to the intermediate operation, when a second preconfigured condition for transitioning to the intermediate power operation is fulfilled,
wherein the intermediate operation includes at least performing a measurement based on the LR reference signal and performing a measurement based on the MR reference signal,
the main radio operation includes performing a measurement based on the MR reference signal, and
the second preconfigured condition includes one or more of
- a stationary criterion,
- a non-cell-edge criterion,
- a measurement based on a MR reference signal being higher than an eight preconfigured threshold,
- a gap between a measurement of a serving cell and a measurement of a neighboring cell being higher than a ninth preconfigured threshold,
- a gap between a measurement based on a LR reference signal and a measurement based on a MR reference signal being smaller than a tenth preconfigured threshold.

10. The UE according to claim 9, wherein the circuity, in operation, further
transitions from the intermediate operation to the main radio operation, when a third preconfigured condition is fulfilled,
transitions from the low power operation to the intermediate operation, when a fourth preconfigured condition is fulfilled, and
wherein the third preconfigured condition includes one or more of
- a non-stationary criterion,
- a cell-edge criterion,
- a measurement based on the MR reference signal being lower than an eleventh preconfigured threshold,
- a gap between a measurement of a serving cell and a measurement of a neighboring cell being lower than a twelfth preconfigured threshold, and
- a gap between a measurement based on the MR reference signal and a measurement based on the LR reference signal being larger than a thirteenth preconfigured threshold;
and the fourth preconfigured condition includes one or more of
- a non-stationary criterion,
- a cell-edge criterion,
- a measurement based on a LR reference signal being lower than a fourteenth preconfigured threshold,
- a gap between a measurement of a serving cell and a measurement of a neighboring cell being lower than a fifteenth preconfigured threshold,
- a gap between a measurement based on a LR reference signal and a measurement based on a MR reference signal being smaller than a sixteenth preconfigured threshold.

11. The UE according to any of the claims 9 to 10, wherein in the intermediate operation, the measurement based on a MR reference signal is performed less frequent than the measurement based on a MR reference signal in the main radio operation.

12. The UE according to any of the claims 1 to 11, wherein
the LR reference signal includes at least one or more of
- a low power wake-up signal ,LP-WUS,
- a low power synchronization signal, LP-SS,
and/or
the MR reference signal includes at least one or more of
- a synchronization signal block, SSB,
- a channel state information reference signal, CSI-RS,

13. The UE according to any of the claims 1 to 12, wherein, when the UE is in an RRC connected mode, the circuitry, in operation, further
receives, from a base station, a configuration for a measurement object, and
- said measurement object includes
∘ a SSB and/or a CSI-RS resource configuration, and
∘ a LP-WUS and/or a LP-SS resource configuration; or
- the configuration includes a first measurement object and a second measurement object, wherein the first measurement object includes a SSB and/or a CSI-RS resource configuration and the second measurement object includes a LP-WUS and/or a LP-SS resource configuration.

14. The UE according to any of the claims 3 to 14, wherein the circuity, in operation, is configured to report a LR reference signal-based measurement and a MR reference signal-based measurement in a same transmission occasion using a Layer-1, L1, LR reference signal-based measurement report or a Layer-3, L3, LR reference signal-based measurement report,
and optionally, the L1 or the L3 LR reference signal-based measurement report includes a differential report between a LR reference signal-based measurement and a MR reference signal-based measurement.

15. A network node comprising:
circuitry, which in operation:
obtains a configuration for a condition for a measurement based on a predetermined reference signal, wherein when the measurement, which is performed by a user equipment, UE, fulfills said condition, the UE performs a low power operation,
a transmitter, which in operation:
transmits an indication of said configuration to the UE.
